# EUROPEAN PATENT SPECIFICATION

(11) **EP 1 549 539 B1**
(45) Date of publication and mention of the grant of the patent: **12.09.2007**
(21) Application number: 03788935.9
(22) Date of filing: 06.10.2003
(51) Int. Cl.: B62D 5/04, B62D 6/00

(54) **A FEEDBACK ASSEMBLY FOR AN ELECTRONICALLY CONTROLLED ELECTRO-MECHANICAL ACTUATING UNIT FOR A MOTOR VEHICLE**
RÜCKKOPPELUNGSVORRICHTUNG FÜR EINEN ELEKTRONISCH GESTEUERTEN, ELEKTROMAGNETISCHEN STELLANTRIEB EINES KRAFTFAHRZEUGS
ENSEMBLE DE RETROACTION DESTINE A UNE UNITE D'ACTIONNEMENT ELECTROMECANIQUE COMMANDEE ELECTRONIQUEMENT POUR UN VEHICULE A MOTEUR

(30) Priority: 09.10.2002 IT TO20020871
(43) Date of publication of application: 06.07.2005
(73) Proprietor: Aktiebolaget SKF, 415 50 Göteborg (SE)
(72) Inventor: DI STEFANO, Enrico, I-10090 Cascine Vica (IT); ROSSI, Mario, I-10090 Rivoli (IT)
(74) Representative: Lotti, Giorgio
(86) International application number: PCT/EP2003/011008
(87) International publication number: WO 2004/033269

(56) References cited:
- DE-A- 10 103 667
- DE-A- 10 157 797
- US-A- 4 686 433
- US-B1- 6 176 341
- US-B1- 6 283 859
- PATENT ABSTRACTS OF JAPAN vol. 2002, no. 10, 10 October 2002 (2002-10-10) -& JP 2002 160659 A (HONDA MOTOR CO LTD), 4 June 2002 (2002-06-04)
- PATENT ABSTRACTS OF JAPAN vol. 1999, no. 10, 31 August 1999 (1999-08-31) -& JP 11 139335 A (TOYOTA MOTOR CORP), 25 May 1999 (1999-05-25)

## Description

The present invention relates to a feedback assembly for an electronically controlled electro-mechanical actuating unit for a motor vehicle, i.e., for a unit commonly referred to, in the technical literature regarding the automotive sector, as "steer-by-wire" unit, a term to which reference will be made hereinafter without any further specifications.

The document US 6283859 discloses a feedback assembly according to the preamble of claim 1.

The most recent studies and developments in the automotive field have been leading in the direction of a progressive replacement of the costly mechanico-hydraulic components with the less costly and more versatile aforementioned drive-by-wire units, and, in the case in point, have lead to replacement of the conventional steering box with a steer-by-wire unit, which is set between the steering wheel and the wheels that steer the motor vehicle (i.e., the direction wheels), and is designed to transfer each steering action onto the steering wheel in a corresponding action of steering on the direction wheels.

In effect, however, in the presence of a conventional steering box, every steering action exerted on the steering wheel is normally affected by the conditions of movement of the motor vehicle, such as, for example, the speed of the motor vehicle itself, the possible irregularities and conditions of adherence of the road surface, or the amplitude of the steering angle. These conditions of movement are transferred by the direction wheels to the steering wheel precisely via a kinematic chain made up of the mechanical members of the steering assembly, thus giving the so-called sensation of steering of the vehicle, and on the steering wheel itself take the form of torques or reactions that resist the steering action.

Consequently, in the presence of a steer-by-wire unit and in order to reproduce on the steering wheel the conditions of movement of the motor vehicle detected by the steer-by-wire unit itself, there are known feedback assemblies that are connected at input to the steer-by-wire unit and comprise, in general, a shaft that is angularly fixed to a steering member of the motor vehicle, and an electrical actuator axially coupled to the shaft for exerting a resistant torque on the shaft itself according to the conditions of movement of the motor vehicle.

The purpose of the present invention is to provide a feedback assembly for an electronically controlled electro-mechanical actuating unit for a motor vehicle, which will enable a reduction in the overall dimensions with respect to the feedback assemblies of a known type described above, and will also enable an increase in performance as compared to the known feedback assemblies.

This purpose is achieved by means of a feedback assembly according to claim 1.

The invention will now be described with reference to the annexed drawings, which illustrate a non-limiting example of embodiment thereof, and in which:
- Figure 1 is a perspective view at a reduced scale of a feedback assembly for an electronically controlled electro-mechanical actuating unit for a motor vehicle according to the present invention;
- Figure 2 is a cross-sectional view of the feedback assembly illustrated in Figure 1 according to a first plane passing through a principal axis of the feedback assembly; and
- Figure 3 is a cross-sectional view according to a second plane, which passes through a principal axis of the feedback assembly and is orthogonal to the plane of Figure 2.

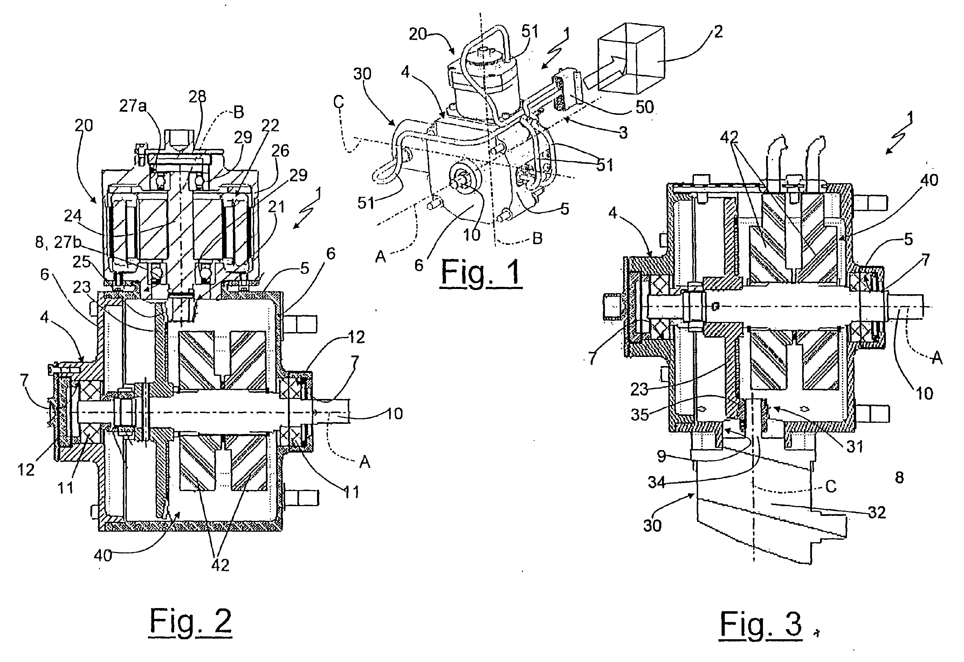

With reference to Figure 1, the reference number 1 designates, as a whole, a feedback assembly for an electronically controlled electro-mechanical actuating unit 2 for a motor vehicle (of a known type and not illustrated).

The assembly 1 comprises a connection 3 to the unit 2, and a containment shell or casing 4, which has a side wall 5 extending along a principal axis A of the assembly 1, and two side walls 6 arranged in a direction transverse to the axis A and on opposite sides of the wall 5.

According to what is illustrated in greater detail in Figures 2 and 3, the assembly 1 further comprises two openings 7 made through the walls 6 in a position corresponding to the axis A, and two further through openings 8 and 9 made through the wall 5 in positions angularly staggered with respect to one another about the axis A itself by an angle of 90°.

In particular, the openings 8 and 9 identify two secondary axes B and C, respectively, which are concurrent with one another and with the axis A, and form with one another and with the axis A itself respective right angles.

The assembly 1 further comprises a shaft 10, which is angularly fixed to a steering wheel (known and not illustrated) of the motor vehicle, and is mounted with opposite ends thereof set through the openings 7 so as to rotate about the axis A. In particular, rotation of the shaft 10 about the axis A is enabled by a pair of bearings 11, which are set in a position corresponding to the openings 7 in a position intermediate between the shaft 10 and the walls 6, and the pre-loading of which is regulated by respective threaded covers or lids 12 set substantially as closing elements for the openings 7 themselves.

The assembly 1 further comprises an electrical actuating device 20 angularly coupled to the shaft 10 for exerting a resistant torque on the shaft 10 itself according to the conditions of movement of the motor vehicle detected by the unit 2, and two devices 30 and 40 for measuring an angular position of the shaft 10.

The devices 20 and 30 are arranged respectively along the axes B and C and are angularly coupled to the shaft 10 by means of respective mechanical transmissions 21 and 31, which comprise, in common, a ring bevel gear 23 fitted on the shaft 10 in a position corresponding to a plane basically defined by the axes B and C, and each of which comprises a respective shaft 24 and 34 set along the axis B and axis C, respectively, and a respective pinion 25 and 35 angularly fixed to the corresponding shaft 24 and 34 and arranged through the corresponding window 8 and 9 for meshing with the ring bevel gear 23. Each bevel-gear pair 23-25 and 23-35 functions as an overgear between the shaft 10 and the corresponding shaft 24 and 34 and has a respective transmission ratio of a pre-set value.

The electrical actuating device 20 is mounted on the outside of the shell 4 in a position corresponding to the window 8, and comprises a substantially cylindrical external body 26 provided, at its opposite ends and in a position corresponding to the axis B, with two openings 27a and 27b engaged by the shaft 24, the window 27b of which substantially mates with the window 8, whilst the window 27a is provided with a respective threaded lid 28 for adjustment of pre-loading of two bearings 29 set between the shaft 24 and the openings 27a and 27b themselves.

Finally, the device 20 comprises an electric brushless motor 22 set within the body 26 between the two bearings 29, and angularly fixed to the shaft 24 for exerting on the shaft 24 itself a torque, the value of which depends upon the conditions of movement of the motor vehicle and which is transmitted to the shaft 10 via the mechanical transmission 21.

The measurement device 30 is a relative-measurement device and comprises an incremental encoder 32 provided with a given angular resolution, which is incremented by a multiplying factor equal to a gear meshing ratio of the mechanical transmission 31. The encoder 32 is mounted on the outside of the wall 5 in a position corresponding to the window 9, and is angularly fixed to the shaft 34 for transmitting to the unit 1 a relative angular position of said steering wheel.

The measurement device 40 is, instead, an absolute-measurement device, and comprises two analogical position sensors 42 fitted on the shaft 10 inside the shell 4, which are designed to send to the unit 2 the absolute angular position of the aforesaid steering wheel, and each of which has a double resistive track (not illustrated) for local diagnosis of the sensors 42 themselves.

A sensor 42 is redundant with respect to the other sensor 42 in such a way as to enable a cross check between the unit 2 and the sensors 42 themselves.

The connection 3 is a connection of an electrical type, and comprises a terminal 50 for connection to the unit 2, and at least four cables 51 for connection between the terminal 50 and the devices 20, 30, and 40.

From the above description, it emerges that the arrangement with concurrent axes of the various devices which make up the assembly 1 enables extreme compactness in the axial direction to be conferred on the assembly 1 itself. In addition, by exploiting an optimal way the sizing of the transmission ratios in an optimal way, it is possible both to increase the angular resolution of the encoder 32 and to multiply the torque transmitted by the transmission 21. Finally, the simultaneous presence of the encoder 32 and the sensors 42 enables the unit 2 to carry out a further check on the coherence, using both the relative information of the device 30 and the absolute information of the device 40.

## Claims

1. A feedback assembly (1) for an electronically controlled electro-mechanical actuating unit (2) for a motor vehicle, the feedback assembly (1) comprising:
- a connection (3) for connection to such an actuating unit (2);
- a shaft (10), which is angularly fixable to the steering wheel of a motor vehicle, and which is mounted so as to rotate about its own longitudinal axis (A), this being the principal axis (A);
- an electrical actuator (20), which is angularly coupled to the shaft (10) for exerting a
- resistant torque on the shaft (10) itself according to the conditions of movement of a motor vehicle;
- a first mechanical transmission (21) with concurrent axes (A, B), one of these being the principal axis (A) and the other being a secondary axis (B), which is set between the electrical actuator (20) and the shaft (10); and
- a relative-measurement device (30) of an angular position of the shaft (10), the feedback assembly (1) being **characterized in that** it further comprises:
a second mechanical transmission (31) with concurrent axes (A, C), one of these being the principal axis (A) and the other being another secondary axis (C), which is set between the relative-measurement device (30) and the shaft (10) itself;
whereby the two secondary axes (B, C) are concurrent with one another and with the principal axis (A), and form with one another and with the principal axis (A) itself respective right angles.

2. The feedback assembly according to Claim 1, **characterized in that** each of the mechanical transmissions (21, 31) comprises a respective bevel-gear pair, which functions as an overgear and is defined by a pinion (25, 35) for each mechanical transmission (21, 31) and a ring bevel gear (23) angularly fixed to both of the pinions (25, 35) and to said shaft (10).

3. The feedback assembly according to Claim 2, **characterized in that** the relative-measurement device (30) is defined by an incremental encoder (32) having a given angular resolution incremented by a multiplying factor equal to a gear meshing ratio of the respective mechanical transmission (31).

4. The feedback assembly according to any one of the preceding claims, **characterized in that** it comprises an absolute-measurement device (40) of an angular position of the shaft (10), which in turn comprises at least one analogical position sensor (42) fitted on the shaft (10).

5. The feedback assembly according to Claim 4, **characterized in that** the absolute-measurement device (40) comprises two analogical position sensors (42) fitted on the shaft (10), one analogical sensor (42) being redundant with respect to the other analogical sensor (42).

6. The feedback assembly according to Claim 5, **characterized in that** it comprises a containment shell provided with a window for each mechanical transmission (21, 31), and a threaded lid for adjustment of pre-loading of the bearings of the mechanical transmission (21, 31) itself.

## Patentansprüche

1. Rückkopplungseinheit (1) für eine elektronisch geregelte elektromechanische Betätigungseinheit (2) für ein Kraftfahrzeug, wobei die Rückkopplungseinheit (1) folgendes umfasst:
- eine Verbindung (3) zur Verbindung mit solch einer Betätigungseinheit (2);
- eine Welle (10), die winklig am Lenkrad eines Kraftfahrzeugs befestigt werden kann und die so montiert ist, dass sie sich um ihre eigene Längsachse (A) dreht, wobei dies die Hauptachse (A) ist;
- ein elektrisches Betätigungselement (20), das winklig mit der Welle (10) verbunden ist, um ein beständiges Drehmoment auf die Welle (10) selbst gemäß den Fahrbedingungen eines Kraftfahrzeugs auszuüben;
- eine erste mechanische Transmission (21) mit durch einen Punkt laufenden Achsen (A, B), wobei eine davon die Hauptachse (A) und die andere die sekundäre Achse (B) ist, die zwischen das elektrische Betätigungselement (20) und die Welle (10) gesetzt ist; und
- ein Relativmessgerät (30) für eine Winkelposition der Welle (10), wobei die Rückkopplungseinheit (1) **dadurch gekennzeichnet ist, dass** sie ferner folgendes umfasst:
eine zweite mechanische Transmission (31) mit durch einen Punkt laufenden Achsen (A, C), wobei eine von diesen die Hauptachse (A) und die andere eine weitere sekundäre Achse (C) ist, die zwischen dem Relativmessgerät (30) und der Welle (10) selbst liegt;
wodurch die zwei sekundären Achsen (B, C) miteinander und mit der Hauptachse (A) durch denselben Punkt gehen und zueinander und zur Hauptachse (A) selbst rechte Winkel bilden.

2. Rückkopplungseinheit nach Anspruch 1, **dadurch gekennzeichnet, dass** jede der mechanischen Transmissionen (21, 31) ein entsprechendes Winkelgetriebe umfasst, das als Übersetzungsgetriebe fungiert und durch ein Ritzel (25, 35) für jede mechanische Transmission (21, 31) und einen Kegelzahnradkranz (23) definiert ist, der winklig an den Ritzeln (25, 35) und an der Welle (10) befestigt ist.

3. Rückkopplungseinheit nach Anspruch 2, **dadurch gekennzeichnet, dass** das Relativmessgerät (30) durch eine Inkrementcodiereinrichtung (32) definiert ist, die eine gegebene Winkelauflösung hat, die durch einen Faktor erhöht ist, der gleich einem Zahnradübersetzungsverhältnis der jeweiligen mechanischen Transmission (31) ist.

4. Rückkopplungseinheit nach einem der vorherigen Ansprüche, **dadurch gekennzeichnet, dass** sie ein Absolutmessgerät (40) für eine Winkelposition der Welle (10) umfasst, die wiederum mindestens einen analogen Positionssensor (42) umfasst, der an der Welle (10) befestigt ist.

5. Rückkopplungseinheit nach Anspruch 4, **dadurch gekennzeichnet, dass** das Absolutmessgerät (40) zwei analoge Positionssensoren (42) umfasst, die an der Welle (10) befestigt sind, wobei ein analoger Sensor (42) redundant in Bezug auf den anderen analogen Sensor (42) ist.

6. Rückkopplungseinheit nach Anspruch 5, **dadurch gekennzeichnet, dass** sie eine Sicherheitshülle umfasst, die mit einem Fenster für jede mechanische Transmission (21, 31) und einem Gewindedeckel zum Einstellen der Vorbelastung der Lager der mechanischen Transmission (21, 31) selbst versehen ist.

## Revendications

1. Ensemble de rétroaction (1) destiné à une unité d'actionnement électromécanique (2) commandée par voie électronique et destinée à un véhicule motorisé, l'ensemble de rétroaction (1) comprenant :
- une connexion (3) destinée à réaliser la connexion avec une telle unité d'actionnement (2) ;
- un arbre (10), qui peut être fixé angulairement au volant de direction d'un véhicule motorisé, et qui est monté de manière à pouvoir tourner autour de son propre axe longitudinal (A), qui est l'axe principal (A) ;
- un actionneur électrique (20), qui est couplé angulairement à l'arbre (10) afin d'exercer un couple résistant sur l'arbre (10) proprement dit en fonction des conditions de déplacement d'un véhicule motorisé ;
- une première transmission mécanique (21) avec des axes concourants (A, B), l'un de ceux-ci étant l'axe principal (A) et l'autre étant un axe secondaire (B), qui est agencée entre l'actionneur électrique (20) et l'arbre (10) ; et
- un dispositif de mesure relative (30) d'une position angulaire de l'arbre (10), l'ensemble de rétroaction (1) étant **caractérisé en ce qu'**il comprend en outre :
une deuxième transmission mécanique (31) avec des axes concourants (A, C), l'un de ceux-ci étant l'axe principal (A) et l'autre un autre axe secondaire (C), qui est agencée entre le dispositif de mesure relative (30) et l'arbre (10) proprement dit ;
moyennant quoi les deux axes secondaires (B, C) sont concourants l'un avec l'autre et avec l'axe principal (A), et forment l'un avec l'autre et avec l'axe principal (A) proprement dit des angles droits respectifs.

2. Ensemble de rétroaction selon la revendication 1, **caractérisé en ce que** chacune des transmissions mécaniques (21, 31) comprend une paire respective d'engrenages coniques, laquelle fait office de surmultiplicateur et est définie par un pignon (25, 35) destiné à chaque transmission mécanique (21, 31) et un engrenage conique annulaire (23) fixé de manière angulaire sur les deux pignons (25, 35) et sur ledit arbre (10).

3. Ensemble de rétroaction selon la revendication 2, **caractérisé en ce que** le dispositif de mesure relative (30) est défini par un codeur incrémentiel (32) ayant une résolution angulaire donnée incrémentée par un facteur de multiplication égal au rapport d'engrènement de la transmission mécanique (31) respective.

4. Ensemble de rétroaction selon l'une quelconque des revendications précédentes, **caractérisé en ce qu'**il comprend un dispositif de mesure absolue (40) d'une position angulaire de l'arbre (10), qui comprend à son tour au moins un capteur de position analogique (42) adapté sur l'arbre (10).

5. Ensemble de rétroaction selon la revendication 4, **caractérisé en ce que** le dispositif de mesure absolue (40) comprend deux capteurs de position analogiques (42) adaptés sur l'arbre (10), l'un des capteurs analogiques (42) étant redondant par rapport à l'autre capteur analogique (42).

6. Ensemble de rétroaction selon la revendication 5, **caractérisé en ce qu'**il comprend un carter protecteur doté d'une fenêtre pour chaque transmission mécanique (21, 31), et d'une lèvre filetée pour ajuster la précharge des paliers de la transmission mécanique (21, 31) proprement dite.
